# EUROPÄISCHE PATENTSCHRIFT

(11) **EP 2 222 215 B1**
(45) Veröffentlichungstag und Bekanntmachung des Hinweises auf die Patenterteilung: **02.05.2012**
(21) Anmeldenummer: 08856084.2
(22) Anmeldetag: 28.11.2008
(51) Int. Cl.: A47L 9/28

(54) **VORRICHTUNG ZUR STEUERUNG ODER REGELUNG DER MOTORLEISTUNG EINES STAUBSAUGERS**
DEVICE FOR CONTROLLING OR REGULATING THE MOTOR POWER OF A VACUUM CLEANER
DISPOSITIF DE COMMANDE OU DE RÉGULATION DE LA PUISSANCE MOTEUR D'UN ASPIRATEUR

(30) Priorität: 04.12.2007 DE 102007059930
(43) Veröffentlichungstag der Anmeldung: 01.09.2010
(73) Patentinhaber: Kurz, Gerhard, 75382 Althengstett (DE)
(72) Erfinder: KOMANN, Mario, 96528 Schalkau (DE)
(74) Vertreter: Witte, Weller & Partner
(86) Internationale Anmeldenummer: PCT/EP2008/010121
(87) Internationale Veröffentlichungsnummer: WO 2009/071248

(56) Entgegenhaltungen:
- EP-A- 0 362 894
- WO-A-02/091899
- DE-A1- 3 041 167
- DE-C1- 4 304 263
- DE-C1- 10 012 182

## Beschreibung

Die vorliegende Erfindung betrifft eine Vorrichtung zur Steuerung oder Regelung der Motorleistung eines Staubsaugers, der zumindest einen Motor, eine Staubabscheideeinrichtung und eine Saugdüse aufweist, mit einer Einrichtung zur Steuerung oder Regelung (nachfolgend kurz Regelungseinrichtung genannt) der Motorleistung und einem ersten Sensor zur Erfassung des Unterdrucks im Bereich der Saugdüse.

Derartige Vorrichtungen zur Steuerung bzw. Regelung der Motorleistung eines Staubsaugers sind allgemein bekannt und werden für Bodenstaubsauger häufig eingesetzt. Sie dienen insbesondere dazu, die Motorleistung zu reduzieren, wenn die erfasste Schiebekraft, d.h. jene Kraft, die zum Schieben oder Ziehen einer Bodensaugdüse oder allgemein einer Saugdüse (bspw. Fugendüse, etc) über den abzusaugenden Boden erforderlich ist, zu groß wird. Das kann beispielsweise dann passieren, wenn die Bodensaugdüse von einem harten Boden auf einen sehr weichen Bodenteppich gebracht wird. Durch die weiche Materialbeschaffenheit gelangt weniger Luft von außen in die Bodensaugdüse, so dass der darin herrschende Unterdruck ansteigt. Dieser Anstieg des Unterdrucks hat zur Folge, dass die Schiebekraft entsprechend ansteigt.

Um die Schiebekraft wieder zu reduzieren, gibt es im Stand der Technik unterschiedliche Lösungsansätze, wobei eine Lösung beispielsweise darin besteht, die Motorleistung zu reduzieren. Andere Lösungen sehen beispielsweise das Anheben der Bodensaugdüse vor, so dass mehr Luft einströmen kann, oder beispielsweise das Öffnen von Nebenluftkanälen, um auf diese Weise den Unterdruck zu verringern.

Eine solche Vorrichtung bzw ein solches Verfahren ist z.B. aus der DE 43 04 263 bekannt.

Beim Benutzen solcher Staubsauger kann es immer wieder passieren, dass Gegenstände angesaugt werden, die die Saugdüse verschließen und damit eine weitere Benutzung unmöglich machen. Der Benutzer muss zuerst wieder den Gegenstand aus der Saugdüse oder Bodensaugdüse entfernen, was schwer und mühsam ist.

Vor diesem Hintergrund besteht die Aufgabe der vorliegenden Erfindung darin, derartige Vorrichtungen so weiterzubilden, dass sie den Bedienkomfort erhöhen, insbesondere dann, wenn Gegenstände die Saugdüse verschließen, und das Beseitigen von Verstopfungen der Saugdüse erleichtern.

Diese Aufgabe wird bei der eingangs genannten Vorrichtung dadurch gelöst, dass die Regelungseinrichtung ausgebildet ist, den Motor für eine vorgegebene Zeitdauer abzuschalten, wenn die Anstiegsgeschwindigkeit des Unterdrucks einen vorgegebenen Wert übersteigt.

D.h. mit anderen Worten, dass die Regelungseinrichtung die Veränderung des Unterdrucks überwacht und bei einem sehr schnellen Ansteigen des Unterdrucks, beispielsweise im Bereich von 100 hPa innerhalb von 0,1 Sekunden, auf eine plötzliche Verstopfung bzw. Verschluss der Saugdüse, bspw. einer Bodensaugdüse schließt und den Motor für kurze Zeitdauer abschaltet. Bedingt durch das Abschalten löst sich entweder der angesaugte Gegenstand wieder von der Saugdüse, oder er kann zumindest sehr einfach vom Benutzer entfernt werden.

Nach Ablauf der vorgegebenen Zeitdauer wird der Motor wieder normal gestartet, und die Vorrichtung arbeitet im normalen Steuerungs- oder Regelungsbetrieb.

Der Vorteil dieser Vorrichtung liegt darin, dass der Bedienungskomfort gesteigert wird, ohne hierfür zusätzliche technische Maßnahmen vorsehen zu müssen. Da der Sensor zur Erfassung des Unterdrucks sehr häufig bereits für andere Zwecke vorhanden ist, muss lediglich der Regelalgorithmus in der Regelungseinrichtung entsprechend ergänzt werden.

Bei einer bevorzugten Weiterbildung weist die Regelungseinrichtung eine Differenziereinheit auf, die das Signal des Sensors nach der Zeit differenziert.

Diese Maßnahme hat den Vorteil, dass eine sehr gute und genaue Ermittlung der Anstiegsgeschwindigkeit des Unterdrucks möglich wird.

Bevorzugt weist die Regelungseinrichtung eine Vergleichereinheit auf, der einerseits das Ausgangssignal der Differenziereinheit und andererseits ein vorgegebener Vergleichswert zugeführt ist.

Mit Hilfe dieser Maßnahme wird der ermittelte Wert der Differenziereinheit, der ein Maß für die Anstiegsgeschwindigkeit ist, mit einem vorgegebenen Vergleichswert verglichen.

Bei einer bevorzugten Weiterbildung ist der Sensor als analoger Drucksensor vorgesehen.

Diese Maßnahme ist unter Kostenaspekten vorteilhaft, da analoge Drucksensoren wenig aufwändige und damit günstige Bauelemente sind.

Bei einer bevorzugten Weiterbildung bildet der erste Sensor zusammen mit der Regelungseinrichtung einen ersten Regelkreis, um auf der Basis des Signals dieses Sensors den Unterdruck und damit die Schiebekraft unterhalb eines vorgegebenen Werts zu halten.

Diese Maßnahme hat den Vorteil, dass die Erfassung des Unterdrucks zusätzlich genutzt werden kann, um die Schiebekraft zu regeln, d.h. unterhalb eines vorgegebenen maximalen Schiebekraftwerts zu halten. Da der Unterdruck proportional zu der Schiebekraft ist, kann anhand des erfassten Unterdrucks auf die Schiebekraft geschlossen werden. Dies hat zum Ergebnis, dass keine aufwändigeren zusätzlichen Kraftmesssensoren, beispielsweise in Form von Dehnungsmessstreifen, vorgesehen sein müssen.

Bei einer bevorzugten Weiterbildung ist ein zweiter Sensor zur Erfassung des Luft-Volumenstroms vorgesehen, der zusammen mit der Regelungseinrichtung einen zweiten Regelkreis bildet, um auf der Basis des Signals des zweiten Sensors den Luft-Volumenstrom auf einem vorgegebenen Luft-Volumenstrom-Wert zu halten, und ist eine Regelkreis-Auswahleinrichtung vorgesehen, die abhängig von den Signalen der beiden Sensoren einen der beiden Regelkreise aktiviert.

D.h. mit anderen Worten, dass die erfindungsgemäße Motorleistungs-Regelungsvorrichtung zwei Regelkreise besitzt, die jedoch nicht gleichzeitig aktiv sind. Vielmehr wählt die Regelkreis-Auswahleinrichtung einen der beiden Regelkreise zur Regelung der Motorleistung aus, und zwar abhängig davon, welche Werte die beiden Sensoren liefern. Signalisiert beispielsweise der erste Sensor eine Schiebekraft, die größer als ein vorgegebener Wert ist, schaltet die Regelkreis-Auswahleinrichtung vom einen Regelkreis, der eine Luft-Volumenstrom-Regelung ausführt, auf den anderen Regelkreis, der eine Schiebekraft-Regelung ausführt. Dieser Regelkreis bleibt so lange aktiv, bis die Regelkreis-Auswahleinrichtung vom ersten Sensor signalisiert bekommt, dass die Schiebekraft den vorgegebenen maximalen Wert wieder unterschritten hat.

Mit dieser Maßnahme lässt sich einerseits das Saugergebnis und andererseits der Bedienungskomfort weiter steigern.

Bei einer bevorzugten Weiterbildung ist die Regelungseinrichtung derart ausgebildet, dass der Motor nur dann abgeschaltet wird, wenn der vom ersten Sensor erfasste Unterdruck einen vorgegebenen Wert überstiegen hat.

Diese Maßnahme hat den Vorteil, dass für bestimmte Fälle Abschaltungen vermieden werden können, bei denen zwar ein schneller Unterdruckanstieg erkannt ein bestimmter Unterdruck ab nicht erreicht wurde. Derartige Fälle können beispielsweise dann auftreten, wenn die Saugdüse von einem sehr harten Boden auf einen sehr weichen Boden gebracht wird. Hier wäre der Anstieg des Unterdrucks sehr stark, der Unterdruck würde jedoch nicht den vorgegebenen Wert erreichen, da die Saugdüse nicht verschlossen wäre.

Die der Erfindung zugrunde liegende Aufgabe wird auch von einem Verfahren zur Steuerung- oder Regelung der Motorleistung eines Staubsaugers gelöst, das die folgenden Schritte aufweist: Erfassen des Unterdrucks an der Saugdüse, Berechnen der Anstiegsgeschwindigkeit des erfassten Unterdrucks, und Abschalten des Motors für eine vorgegebene Zeitdauer, wenn die Anstiegsgeschwindigkeit einen vorgegebenen Wert übersteigt.

Die mit diesem Verfahren einhergehenden Vorteile wurden bereits zuvor beschrieben, so dass an dieser Stelle darauf verzichtet werden kann.

Bei einer bevorzugten Weiterbildung wird der erfasste Unterdruck nach der Zeit differenziert und anschließend mit einem vorgegebenen Wert verglichen.

Mit dieser Maßnahme lässt sich die Anstiegsgeschwindigkeit besonders gut und genau ermitteln.

Bei einer bevorzugten Weiterbildung wird die Leistung des Motors derart geregelt, dass die Schiebekraft unterhalb eines vorgegebenen Werts liegt.

Diese Maßnahme hat den Vorteil, dass der Bedienungskomfort gesteigert wird, da der Benutzer die Bodensaugdüse immer mit einer Kraft verschieben kann, die unterhalb eines maximalen vorgegebenen Werts liegt.

Die der Erfindung zugrunde liegende Aufgabe wird auch von einem Bodenstaubsauger gelöst, der eine erfindungsgemäße Regelungsvorrichtung enthält.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun nachfolgend anhand eines Ausführungsbeispiels unter Zuhilfenahme von Figuren näher erläutert. Dabei zeigen:
- Fig. 1: eine schematische Darstellung des Staubsaugers;
- Fig. 2: ein schematisches Blockdiagramm einer Regelungsvorrichtung, die in einem Staubsauger verwendet wird; und
- Fig. 3: ein Diagramm zur Erläuterung der Funktionsweise der Regelungsvorrichtung.

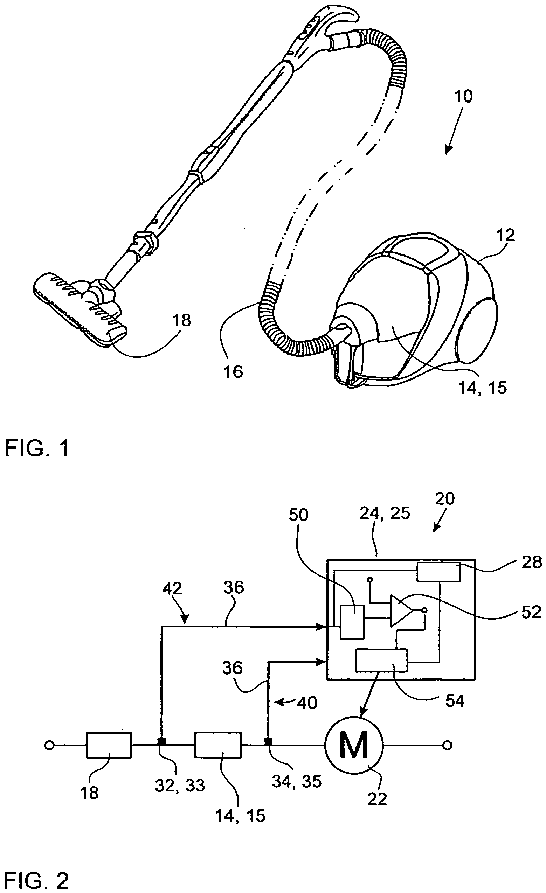

In Fig. 1 ist ein Staubsauger, insbesondere ein Bodenstaubsauger, schematisch dargestellt und mit dem Bezugszeichen 10 gekennzeichnet. Der Bodenstaubsauger 10 weist ein Gehäuse 12 auf, das neben einem nicht zu erkennenden Motor auch eine Staubabscheideeinrichtung, insbesondere eine Staubbeutelaufnahmeeinrichtung 14 mit einem Staubbeutel 15 aufnimmt. Darüber hinaus ist in dem Gehäuse 12 die zur Steuerung oder Regelung des Motors erforderliche Elektronik enthalten, wobei die Leistung des Motors üblicherweise über eine so genannte Phasenanschnittsteuerung eingestellt wird.

Vom Staubsaugergehäuse 12 geht ein Schlauch und/oder Rohr 16 zu einer Saugdüse, insbesondere einer Bodensaugdüse 18, die zum Reinigen über den Boden geschoben wird. Auch wenn nachfolgend nur noch von einer Bodensaugdüse die Rede ist, kann statt dessen natürlich auch jede andere Art von Saugdüse vorgesehen sein. Da der allgemeine Aufbau eines solchen Bodenstaubsaugers allgemein bekannt ist, wird darauf nicht weiter eingegangen.

Die vom Motor angesaugte Luft gelangt beim Saugen über die Bodensaugdüse 18 und den Schlauch 16 in den Staubbeutel 15, der die Staubpartikel herausfiltert, passiert dann den Motor und gelangt wieder aus dem Staubsaugergehäuse 12 nach außen.

Um das Saugergebnis konstant zu halten, ist es erforderlich, den durch den Staubbeutel verursachten, sich ständig ändernden Strömungswiderstand auszugleichen. Für ein gutes Saugergebnis soll nämlich der Luft-Volumenstrom zwischen Staubbeutel und Motor konstant sein.

Um eine solche Luft-Volumenstrom-Konstanthaltung zu realisieren, umfasst der Bodenstaubsauger 10 einen Regelkreis, der einen Sensor zur Erfassung des Luft-Volumenstroms zwischen Staubabscheideeinrichtung, insbesondere Staubbeutelaufnahmeeinrichtung 14 und Motor aufweist, und abhängig davon die Leistung des Motors regelt.

Wird bei wirksamer Luft-Volumenstrom-Regelung die Bodensaugdüse 18 von einem harten Boden auf einen weichen Teppichboden geschoben, verringert sich der Luftdurchfluss von außen in die Bodensaugdüse 18 und damit zum Staubbeutel deutlich, was zur Folge hat, dass die Luft-Volumenstrom-Regelung aufgrund des reduzierten Volumenstroms die Leistung des Motors erhöht, um den konstanten vorgegebenen Volumenstrom wieder zu erreichen.

Das führt jedoch dazu, dass sich die Bodensaugdüse noch stärker an den Boden ansaugt, so dass die zum Schieben der Bodensaugdüse benötigte Kraft (Schiebekraft) weiter ansteigt, was eine Benutzung deutlich erschwert.

Um diesen Nachteil der Luft-Volumenstrom-Regelung zu überwinden, ist ein weiterer Regelkreis vorgesehen, der die Schiebekraft über einen Sensor erfasst und die Motorleistung so regelt, dass die Schiebekraft einen vorgegebenen Wert nicht übersteigt.

Die beiden Regelkreise werden nun so miteinander verknüpft, dass der erste Regelkreis, der die Schiebekraft beeinflusst, immer dann zum Einsatz gelangt, wenn die Schiebekraft einen vorbestimmten Wert übersteigt. Der zweite Regelkreis, der die Luft-Volumenstrom-Regelung übernimmt, ist dann deaktiviert. Die Regelung der Schiebekraft über den ersten Regelkreis erfolgt so lange, bis der vorgegebene Wert unterschritten wird. Dann wird der zweite Regelkreis wieder aktiviert, und der erste Regelkreis wird deaktiviert.

Die beiden vorgesehenen Regelkreise werden also nach vorbestimmten Kriterien bzw. Regeln eingesetzt, wobei immer nur einer der beiden Regelkreise aktiv ist, während der andere Regelkreis inaktiv ist. Die Auswahl des zu aktivierenden Regelkreises erfolgt hierbei in dem beschriebenen Ausführungsbeispiel auf der Grundlage der erfassten Schiebekraft. Das Überschreiten einer vorgegebenen Schiebekraft führt zur Aktivierung des ersten Regelkreises, während ansonsten der zweite Regelkreis aktiv ist.

Beim Saugen kann es auch immer wieder passieren, dass die Bodensaugdüse durch einen ungewollt angesaugten Gegenstand verstopft bzw. verschließt. Das Ergebnis ist, dass die Volumen-Strom-Regelung den Motor an seine Maximalleistung fährt, um den vorgegebenen Luft-Volumenstrom-Wert aufrecht zu erhalten. Das bedeutet andererseits, dass der Gegenstand mit maximaler Leistung des Motors angesaugt wird.

Um diesen Verschluss bzw. diese Verstopfung zu beseitigen, muss der Benutzer entweder den Gegenstand gegen die Saugkraft von der Bodensaugdüse 18 abziehen, oder den Motor abschalten, um die Saugkraft zu reduzieren. Es erschwert das Saugen und dient nicht der Steigerung des Saugkomforts.

Aus diesem Grund besitzt der Bodenstaubsauger 10 eine Steuerungs- oder Regelungsschaltung (nachfolgend nur Regelungsschaltung genannt), die die Motorleistung für eine kurze Zeitdauer abschaltet, wenn der Unterdruckanstieg (bzw. Druckabfall) innerhalb einer bestimmten Zeit sehr groß ist. Steigt der Unterdruck beispielsweise innerhalb von 0,1 Sekunden um 100 hPa, kann die Regelungsschaltung daraus den Schluss ziehen, dass die Bodensaugdüse 18 durch Ansaugen eines bestimmten Gegenstandes verschlossen ist.

Schaltet der Motor in diesem Fall für eine kurze Zeitdauer aus, kann die Bodensaugdüse 18 leicht von dem angesaugten Gegenstand, beispielsweise einem Vorhang etc., entfernt werden, oder kann der Benutzer den angesaugten Gegenstand aus der Bodensaugdüse 18 leicht entfernen.

Zusätzlich könnte die Regelungsschaltung noch einen Vergleich des gemessenen Unterdrucks mit einem vorgegebenen Wert durchführen, und die Abschaltung nur dann zulassen, wenn dieser Wert überschritten wurde.

Um die vorgenannten Funktionen zu erreichen, weist die Regelungsvorrichtung den in Fig. 2 gezeigten Aufbau auf.

In Fig. 2 ist eine schematische Darstellung des Regelungsaufbaus gezeigt, wobei Bodensaugdüse 18 und Staubbeutelaufnahmeeinrichtung 14 als Rechtecke dargestellt sind und jeweils einen Strömungswiderstand symbolisieren. Die Regelungsschaltvorrichtung 20 umfasst eine Regelungsschaltung 24, beispielsweise in Form eines Mikroprozessors 25, die bestimmte Eingangssignale über Leitungen 36 empfängt, auswertet und als Leistungsregelungssignal an den Motor 22 abgibt.

Die Regelungsvorrichtung 20 umfasst einen Drucksensor 32, der der Bodensaugdüse 18 zugeordnet ist und den in der Bodensaugdüse 18 herrschenden Unterdruck (bzw. Druck) misst. Der Drucksensor 32 kann entweder im Bereich der Bodensaugdüse 18 oder am Ende des Schlauchs 16 im Gehäuse 12 des Bodenstaubsaugers vorgesehen sein. Der Drucksensor 32 ist als analoger Drucksensor 33 vorgesehen.

Die Regelungsvorrichtung 20 weist einen weiteren Drucksensor 34 auf, der zwischen Staubbeutelaufnahmeeinrichtung 14 und Motor 22 innerhalb des Gehäuses 12 angeordnet ist.

Beide Sensoren 32, 34 geben ihre Signale an die Regelungsschaltung 24 über Leitungen 36 ab. Auf diese Art und Weise werden zwei Regelkreise 40, 42 aufgebaut, wobei der zweite Regelkreis 40 den Drucksensor 34 und die Regelungsschaltung 24 aufweist und der erste Regelkreis 42 den Drucksensor 32 und die Regelungsschaltung 24.

Der zweite Regelkreis 40 dient - wie bereits erwähnt - der Aufrechterhaltung eines konstanten Luft-Volumenstroms zwischen Staubbeutelaufnahmeeinrichtung 14 und Motor 22, und der erste Regelkreis 42 gewährleistet, dass die Schiebekraft einen bestimmten Wert nicht überschreitet.

Hierbei ist anzumerken, dass in dem vorliegenden Ausführungsbeispiel die Schiebekraft nicht über einen Kraftsensor ermittelt wird, sondern über die Messung des Unterdrucks zwischen Boden und Bodensaugdüse 18. Da eine proportionale Beziehung zwischen Schiebekraft und Unterdruck besteht, kann über die Erfassung des Unterdrucks auf die erforderliche Schiebekraft geschlossen werden. Je höher der Unterdruck an der Bodensaugdüse 18, desto größer wird die Kraft, um die Bodensaugdüse über den Boden zu schieben bzw. zu ziehen.

Wie der Drucksensor 32 ist auch der Drucksensor 34 als analoger Drucksensor 35 ausgeführt, wobei über den gemessenen Druck auf die Strömungsgeschwindigkeit der Luft und damit auf den Luft-Volumenstrom geschlossen werden kann. Ein Strömungsgeschwindigkeitsmesssensor ist folglich nicht erforderlich, könnte aber durchaus alternativ statt dem Drucksensor 34 vorgesehen werden.

Die Aktivierung des zweiten oder des ersten Regelkreises 40, 42 erfolgt über eine Regelkreis-Auswahleinrichtung 28, die in der Regelungsschaltung 24 vorgesehen ist.

Abhängig von dem abgegebenen Signal des Drucksensors 32 wird entweder der erste Regelkreis oder der zweite Regelkreis 42, 40 aktiviert.

Wie zuvor bereits erläutert, aktiviert die Regelkreis-Auswahleinrichtung 28 den zweiten Regelkreis 40, wenn der Unterdruck an der Bodensaugdüse 18 unterhalb eines vorgegebenen Werts liegt, und schaltet auf den ersten Regelkreis 42 um, wenn das Signal des Sensors 32, also der dort gemessene Unterdruck, über einen vorgegebenen Wert steigt.

Die Regelungsvorrichtung 20 gewährleistet folglich, dass einerseits der Luft-Volumenstrom konstant gehalten wird, auch wenn sich der Staubbeutel langsam füllt und damit der Strömungswiderstand ansteigt. Die Regelungsschaltung 24 steigert in diesem Fall die Leistung des Motors 22. Um andererseits zu verhindern, dass diese Regelung zu einem übermäßigen Anstieg des Unterdrucks an der Bodensaugdüse 18 und damit der Schiebekraft führt, wird in diesem Fall der erste Regelkreis aktiviert, der die Motorleistung wieder so weit verringert, bis der Unterdruck und damit die Schiebekraft einen maximalen Wert unterschritten hat.

Um die erwähnte kurze Abschaltung des Motors durchzuführen, weist die Regelungsschaltung 24 einen Differenzierer 50 auf, dem das Signal des Sensors 32 zugeführt wird. Dieser Differenzierer 50 differenziert den gemessenen Unterdruck an der Bodensaugdüse 18 und führt das Ergebnis einem Vergleicher 52 zu. Der Vergleicher 52 vergleicht den vom Differenzierer gelieferten Wert, der ein Maß der Änderungsgeschwindigkeit des Unterdrucks ist, mit einem vorgegebenen Wert und gibt das Ergebnis an die Motorleistungssteuerung, die mit dem Bezugszeichen 54 gekennzeichnet ist, weiter.

Zeigt das Ausgangssignal des Vergleichers 52 das Übersteigen des vorgegebenen Werts an, wird der Motor für eine kurze Zeitdauer, beispielsweise einige wenige Sekunden, abgeschaltet. Danach wird der Motor wieder eingeschaltet, und einer der beiden Regelkreise 40, 42 wird aktiv.

Optional kann die Regelungsschaltung 24 noch einen Vergleicher aufweisen, dem einerseits der vom ersten Sensor 32 erfasste Unterdruck-Wert zugeführt wird und andererseits ein vorgegebener Wert. Übersteigt der erfasste Unterdruck-Wert den vorgegebenen Wert, wird die Abschaltung des Motors blockiert, d.h. nicht ausgeführt, auch wenn die Anstiegsgeschwindigkeit über dem vorgegebenen Wert liegt.

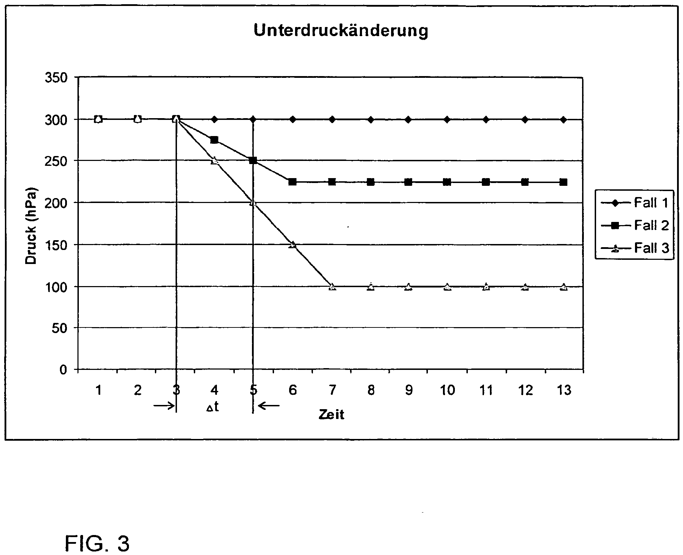

In dem Diagramm von Fig. 3 sind drei Fälle dargestellt, die unterschiedliche Unterdruckverläufe an der Bodensaugdüse 18 zeigen.

Fall 1 zeigt einen konstanten Unterdruckverlauf über der Zeit, so dass die Motorabschaltung nicht aktiv werden muss. Im Fall 2 sinkt der Druck innerhalb eines Zeitfensters Δt von 300 auf 225 hPa (gleichbedeutend mit einem Anstieg des Unterdrucks). Dieser Anstieg des Unterdrucks innerhalb der Zeitdauer Δt, beispielsweise 0,1 Sekunde) ist kleiner als der vorgegebene, dem Vergleicher 52 zugeführte Wert, so dass auch in diesem Fall keine Motorabschaltung erfolgt.

Bei dem gezeigten Fall 3 steigt der Unterdruck innerhalb der Zeit Δt um 100 hPa, d.h. der Druck fällt von 300 hPa auf 200 hPa. Dieser schnelle Anstieg des Unterdrucks wird als Verstopfen der Bodensaugdüse 18 beurteilt, da der Differenzwert (beispielsweise 100 hPa dividiert durch 0,1 Sekunde) größer ist als der vorgegebene Wert. Die Motorleistungssteuerung 54 empfängt das entsprechende Ausgangssignal des Vergleichers 52 und veranlasst eine Abschaltung des Motors für eine vorgegebene Zeitdauer. Nach Ablauf der Zeitdauer wird der Motor dann wieder eingeschaltet. An dieser Stelle sei angemerkt, dass die gewählten Druckwerte rein beispielhafter Natur sind und alleine der Erläuterung der Erfindung dienen, die Erfindung aber nicht darauf beschränken sollen.

Die abhängig vom Anstieg des Unterdrucks durchgeführte Motorabschaltung arbeitet vollständig unabhängig von dem ersten und dem zweiten Regelkreis. Insbesondere kann die Motorabschaltung auch ohne die beiden Regelkreise vorgesehen sein. Zur Ausführung der druckanstiegsabhängigen Motorabschaltung ist es lediglich erforderlich, den Drucksensor 32, sowie Differenzierer 50 und Vergleicher 52, mit der Motorleistungssteuerung 54 vorzusehen. Der Sensor 34 zur Luft-Volumenstromregelung ist dann beispielsweise nicht erforderlich.

In Kombination mit den beiden Regelkreisen und der beschriebenen Regelkreis-Auswahl ist die erfindungsgemäße Motorabschaltung jedoch besonders vorteilhaft, da viele den Komfort erhöhende Funktionen bei gleich bleibendem technischem Aufwand realisierbar sind.

## Patentansprüche

1. Vorrichtung zur Steuerung- oder Regelung der Motorleistung eines Staubsaugers, der zumindest einen Motor, eine Staubabscheideeinrichtung und eine Saugdüse aufweist, mit
- einer Einrichtung (24; Regelungseinrichtung) zur Steuerung oder Regelung der Motorleistung, und
- einem ersten Sensor (32) zur Erfassung des Unterdrucks im Bereich der Saugdüse (18),
**dadurch gekennzeichnet, dass** die Regelungseinrichtung (24) ausgebildet ist, den Motor (22) für eine vorgegebene Zeitdauer abzuschalten, wenn die Anstiegsgeschwindigkeit des Unterdrucks einen vorgegebenen Wert übersteigt.

2. Vorrichtung nach Anspruch 1, **dadurch gekennzeichnet, dass** die Regelungseinrichtung (24) eine Differenziereinheit (50) aufweist, die das Signal des Sensors (32) nach der Zeit differenziert.

3. Vorrichtung nach Anspruch 2, **dadurch gekennzeichnet, dass** die Regelungseinrichtung (24) eine Vergleichereinheit (52) aufweist, der einerseits das Ausgangssignal der Differenziereinheit (50) und andererseits ein vorgegebener Vergleichswert zugeführt ist.

4. Vorrichtung nach einem der vorhergehenden Ansprüche, **dadurch gekennzeichnet, dass** der Sensor (32) als analoger Drucksensor (33) vorgesehen ist.

5. Vorrichtung nach einem der vorhergehenden Ansprüche, **dadurch gekennzeichnet, dass** der erste Sensor (32) zusammen mit der Regelungseinrichtung (24) einen ersten Regelkreis (42) bildet, um auf der Basis des Signals dieses Sensors (32) den Unterdruck und damit die Schiebekraft unterhalb eines vorgegebenen Werts zu halten.

6. Vorrichtung nach einem der vorhergehenden Ansprüche, mit
- einem zweiten Sensor (34) zur Erfassung des Luft-Volumenstroms, der zusammen mit der Regelungseinrichtung einen zweiten Regelkreis (40) bildet, um auf der Basis des Signals des zweiten Sensors (34) den Luft-Volumenstrom auf einem vorgegebenen Luft-Volumenstrom-Wert zu halten, und
- einer Regelkreis-Auswahleinrichtung (28), die abhängig von den Signalen der beiden Sensoren (32, 34) einen der beiden Regelkreise (40, 42) aktiviert.

7. Vorrichtung nach Anspruch 6, **dadurch gekennzeichnet, dass** der zweite Sensor (34) ein Drucksensor (35) ist.

8. Vorrichtung nach einem der vorhergehenden Ansprüche, **dadurch gekennzeichnet, dass** die Regeleinrichtung (24) ausgebildet ist, den Motor nur dann abzuschalten, wenn der vom ersten Sensor erfasste Unterdruck einen vorgegebenen Wert überschritten hat.

9. Verfahren zur Steuerung oder Regelung der Motorleistung eines Staubsaugers, der zumindest einen Motor, eine Staubabscheideeinrichtung und eine Saugdüse aufweist, mit den Schritten:
- Erfassen des Unterdrucks an der Saugdüse,
- Berechnen der Anstiegsgeschwindigkeit des erfassten Unterdrucks, und
- Abschalten des Motors für eine vorgegebene Zeitdauer, wenn die Anstiegsgeschwindigkeit einen vorgegebenen Wert übersteigt.

10. Verfahren nach Anspruch 9, **dadurch gekennzeichnet, dass** der erfasste Unterdruck nach der Zeit differenziert wird und anschließend mit einem vorgegeben Wert verglichen wird.

11. Verfahren nach Anspruch 9 oder 10, **dadurch gekennzeichnet, dass** die Leistung des Motors derart geregelt wird, dass die Schiebekraft unterhalb eines vorgegebenen Werts liegt.

12. Verfahren nach einem der Ansprüche 9 bis 11, mit den Schritten:
- Erfassen des Luft-Volumenstroms zwischen Staubabscheideeinrichtung und Motor;
- Regeln der Leistung des Motors derart, dass der Unterdruck unterhalb eines vorgegebenen Werts liegt, solange der erfasste Unterdruck größer ist als ein vorgegebener Wert, und ansonsten Regeln der Leistung des Motors derart, dass ein vorgegebener Luft-Volumenstrom-Wert aufrechterhalten wird.

13. Verfahren nach einem der Ansprüche 9 bis 12, **dadurch gekennzeichnet, dass** die Abschaltung des Motors nur dann erfolgt, wenn der erfasste Unterdruck an der Saugdüse auch einen vorgegebenen Wert überschritten hat.

14. Bodenstaubsauger mit einem Motor, einer Staubabscheideeinrichtung, die einen Staubbeutel aufnehmen kann, und einer Saugdüse, die über eine Saugleitung an den Motor angeschlossen ist, **gekennzeichnet durch** eine Regelungsvorrichtung nach einem der Ansprüche 1 bis 8.

## Claims

1. A device for controlling or regulating the motor power of a vacuum cleaner which has at least a motor, a dust separation device and a suction nozzle, the device having
an arrangement (24; regulation device) for controlling or regulating the motor power, and
a first sensor (32) for detecting the negative pressure in the region of the suction nozzle (18),
**characterized in that** the regulation device (24) is designed to switch off the motor (22) for a predefined period of time if the rate of rise of the negative pressure exceeds a predefined value.

2. The device as claimed in claim 1, **characterized in that** the regulation device (24) has a differentiation unit (50) which differentiates the signal from the sensor (32) with respect to time.

3. The device as claimed in claim 2, **characterized in that** the regulation device (24) has a comparator unit (52) which is supplied firstly with the output signal from the differentiation unit (50) and secondly with a predefined comparison value.

4. The device as claimed in one of the preceding claims, **characterized in that** the sensor (32) is provided in the form of an analog pressure sensor (33).

5. The device as claimed in one of the preceding claims, **characterized in that** the first sensor (32) forms, together with the regulation device (24), a first control loop (42) in order to keep the negative pressure, and therefore the pushing force, below a predefined value on the basis of the signal from said sensor (32).

6. The device as claimed in one of the preceding claims, having
- a second sensor (34) for detecting the volumetric air flow which forms, together with the regulation device, a second control loop (40) in order to keep the volumetric air flow at a predefined volumetric air flow value on the basis of the signal from the second sensor (34), and
- a control loop selection device (28) which activates one of the two control loops (40, 42) as a function of the signals from the two sensors (32, 34).

7. The device as claimed in claim 6, **characterized in that** the second sensor (34) is a pressure sensor (35).

8. The device as claimed in one of the preceding claims, **characterized in that** the regulation device (24) is designed to switch off the motor only when the negative pressure detected by the first sensor has exceeded a predefined value.

9. A method for controlling or regulating the motor power of a vacuum cleaner which has at least a motor, a dust separation device and a suction nozzle, said method comprising the steps of:
- detecting the negative pressure at the suction nozzle,
- calculating the rate of rise of the detected negative pressure, and
- switching off the motor for a predefined period of time if the rate of rise exceeds a predefined value.

10. The method as claimed in claim 9, **characterized in that** the detected negative pressure is differentiated with respect to time, and then compared with a predefined value.

11. The method as claimed in claim 9 or 10, **characterized in that** the power of the motor is regulated in such a way that the pushing force lies below a predefined value.

12. The method as claimed in one of claims 9 to 11, comprising the steps of:
- detecting the volumetric air flow between the dust separation device and the motor;
- regulating the power of the motor in such a way that the negative pressure lies below a predefined value as long as the detected negative pressure is greater than a predefined value, and otherwise regulating the power of the motor in such a way that a predefined volumetric airflow value is maintained.

13. The method as claimed in one of claims 9 to 12, **characterized in that** the motor is switched off only if the detected negative pressure at the suction nozzle has also exceeded a predefined value.

14. A vacuum cleaner having a motor, a dust separation device which can accommodate a dust bag, and a suction nozzle which is connected to the motor via a suction line, **characterized by** a regulation device as claimed in one of claims 1 to 8.

## Revendications

1. Dispositif de commande ou de régulation de la puissance du moteur d'un aspirateur qui comprend au moins un moteur, un dispositif collecteur de poussière et une buse d'aspiration, comprenant
- un dispositif (24 ; dispositif de commande) destiné à commander ou à réguler la puissance du moteur, et
- un premier capteur (32) destiné à détecter la dépression se produisant dans la région de la buse d'aspiration (18),
**caractérisé en ce que** le dispositif de commande (24) est conçu pour interrompre le fonctionnement du moteur (22) pendant une durée prédéterminée lorsque la vitesse d'augmentation de la dépression dépasse une valeur prédéterminée.

2. Dispositif selon la revendication 1, **caractérisé en ce que** le dispositif de commande (24) comprend une unité de différentiation (50) qui différentie le signal du capteur (32) par rapport au temps.

3. Dispositif selon la revendication 2, **caractérisé en ce que** le dispositif de commande (24) comprend une unité de comparaison (52) à laquelle est fourni d'une part le signal de sortie de l'unité de différentiation (50) et d'autre part une valeur de comparaison prédéterminée.

4. Dispositif selon l'une quelconque des revendications précédentes, **caractérisé en ce que** le capteur (32) est prévu en tant que capteur de pression (33).

5. Dispositif selon l'une quelconque des revendications précédentes, **caractérisé en ce que** le premier capteur (32) forme, en association avec le dispositif de commande (24) une boucle de commande (42) destinée à interrompre la dépression et par conséquent la force de poussée sur la base du signal dudit capteur (32) en dessous d'une valeur prédéterminée.

6. Dispositif selon l'une quelconque des revendications précédentes, comprenant :
- un second capteur (34) de détection du flux d'air qui, en association avec le dispositif de commande, forme une seconde boucle de commande (40) pour interrompre le flux d'air sur la base du signal du second capteur (34) lorsqu'une valeur prédéterminée du flux d'air est atteinte, et
- un dispositif de sélection de boucle de commande (28) qui active l'une des deux boucles de commande (40, 42) en fonction des signaux des deux capteurs (32, 34).

7. Dispositif selon la revendication 6, **caractérisé en ce que** le second capteur (34) est un capteur de pression (35).

8. Dispositif selon l'une quelconque des revendications précédentes, **caractérisé en ce que** le dispositif de commande (24) est conçu pour n'interrompre le fonctionnement du moteur que lorsque la dépression détectée par le premier capteur s'abaisse en dessous d'une valeur prédéterminée.

9. Procédé de commande ou de régulation de la puissance du moteur d'un aspirateur qui comprend au moins un moteur, un dispositif collecteur de poussière et une buse d'aspiration, comprenant les étapes consistant à :
- détecter la dépression au niveau de la buse d'aspiration,
- calculer la vitesse d'augmentation de la dépression détectée, et
- interrompre le fonctionnement du moteur pendant un temps prédéterminé lorsque la vitesse d'augmentation dépasse une valeur prédéterminée.

10. Procédé selon la revendication 9, **caractérisé en ce que** la dépression détectée est différentiée en fonction du temps et **en ce qu'**elle est ensuite comparée à une valeur prédéterminée.

11. Procédé selon la revendication 9 ou 10, **caractérisé en ce que** la puissance du moteur est régulée de telle manière que la force de poussée se situe en dessous d'une valeur prédéterminée.

12. Procédé selon l'une quelconque des revendications 9 à 11, comprenant les étapes consistant à :
- détecter le flux d'air entre le dispositif collecteur de poussière et le moteur ;
- réguler la puissance du moteur de telle manière que la dépression se situe en dessous d'une valeur prédéterminée tant que la dépression détectée est supérieure à une valeur prédéterminée et, dans le cas contraire, réguler la puissance du moteur de telle manière qu'une valeur du flux d'air déterminée soit maintenue.

13. Procédé selon l'une quelconque des revendications 9 à 12, **caractérisé en ce que** l'interruption du fonctionnement du moteur n'est effectuée que lorsque la dépression détectée au niveau de la buse d'aspiration dépasse également une valeur prédéterminée.

14. Aspirateur comprenant un moteur et un dispositif de collecte de poussière qui peut recevoir un sac à poussière, et une buse d'aspiration qui est reliée au moteur par l'intermédiaire d'une conduite d'aspiration, **caractérisé par** un dispositif de commande selon l'une quelconque des revendications 1 à 8.
